# FASCICULE DE BREVET EUROPEEN

(11) **EP 2 250 081 B1**
(45) Date de publication et mention de la délivrance du brevet: **02.01.2013**
(21) Numéro de dépôt: 09705436.5
(22) Date de dépôt: 30.01.2009
(51) Int. Cl.: B63H 21/17

(54) **COQUE DYNAMIQUE AUTONOME DE NAVIGATION**
AUTONOMER DYNAMISCHER RUMPF FÜR DIE SCHIFFFAHRT
AUTONOMOUS DYNAMIC SAILING HULL

(30) Priorité: 01.02.2008 FR 0800562
(43) Date de publication de la demande: 17.11.2010
(73) Titulaire: Tarkovacs, Stefan, 95520 Osny (FR)
(72) Inventeur: Tarkovacs, Stefan, 95520 Osny (FR)
(74) Mandataire: Corret, Hélène
(86) Numéro de dépôt international: PCT/IB2009/000164
(87) Numéro de publication internationale: WO 2009/095778

(56) Documents cités:
- GB-A- 2 395 689
- GB-A- 2 405 742
- JP-A- 10 167 189
- US-A1- 2006 009 092
- SATTLER G: "Fuel cells going on-board" JOURNAL OF POWER SOURCES, ELSEVIER, AMSTERDAM, NL, vol. 86, no. 1-2, 1 mars 2000 (2000-03-01), pages 61-67, XP004194100 ISSN: 0378-7753

## Description

La présente invention complète les brevets enregistrés auprès de l'INPI sous les références : 06 09784 (n° de publication 2 853 618) et auprès de l'Office Européen des Brevets sous la référence WO 2004/092006 PCT/FR2004/000900. Le numéro de publication européenne est 1648761 ; et sous la référence 0609784000.

Le premier brevet cité, déposé le 14/04/2003, dénommé « Station autonome sous-marine» revendique une structure creuse caractérisée en ce qu'elle fonctionne dans son entier comme un système complexe de ballasts conçu pour annuler, par le jeu constant de volumes d'eau embarquée et évacuée, sa masse propre et celle de ses équipements opérationnels en milieux liquide.

Il en revendique aussi les conséquences techniques de dimensionnement possibles et d'embarquement de moyens d'autonomie énergétique et opérationnelle, conséquences directes du concept de structure creuse.

Le deuxième brevet cité, déposé le 09/11/2006, dénommé « Structure Dynamique Autonome Sous-marine » revendique l'utilisation des volumes internes d'une structure comme pile à combustibles/stockage des combustibles et comme système de compensation des pressions extérieures exercées sur ladite structure.

L'utilité du principe dit « Coque Dynamique Autonome de Navigation » de la présente invention découle directement des précédents brevets ci-dessus référencés en ce qu'elle redéfinit la coque d'un quelconque bâtiment naval de surface, et non plus sous marine, en structure de navigation contenant et produisant sa propre source énergétique de propulsion, ainsi que ses propres moyens de contrôle de flottabilité.

Les coques de navires marins et fluviaux sont conçues pour pouvoir supporter à la surface de l'eau des masses équivalentes à la masse de l'eau qu'elles déplacent. De conception inerte, ces coques sont munies de réservoirs rajoutés pour embarquer des carburants, et de moyens de propulsion correspondants, tel qu'un ensemble comprenant un/des moteur(s), un/des arbre(s) de transmission et une ou plusieurs hélices.

La plus part de ces coques ne sont pas prévues pour compenser une avarie importante, et une déchirure suffit à mettre la dite coque en perdition.

Les moyens de propulsion marine des bâtiments de surface, bien que techniquement variés et pour certains non polluants, sont pour une écrasante majorité tributaires de la combustion d'hydrocarbures.

Ceux fonctionnant à partir d'énergie électrique nécessitent soit des batteries importantes, soit un système complexe transformant une combustion en électricité, soit une installation photovoltaïque ou de capteurs solaires.

En terme de pollution, il est rare que dans l'ensemble de ces systèmes, un navire ne pollue pas les eaux marines directement, à un moment ou à un autre, ou indirectement.

L'état de la technique compte déjà divers concepts de propulsion marine basée sur l'utilisation de piles à combustibles embarquées, alimentées soit par un système de production d'hydrogène/Oxygène ou hydrogène seul, tel que décrit par le brevet GB 2 405 742 A de M Martin Phillip Usher, ou encore par celui de Mitsubishi Heavy Ind. Publié sous le N° 10167189, ou par stockage de ces gaz prêts à l'emploi en bouteilles sous pression associé à un stockage électrique en batteries.

En terme d'autonomie, les bâtiments de surface dépendent de la place faite aux réservoirs de carburants et de la puissance utilisée. Les procédés cités ci-dessus n'optimisent pas le principe de la coque pour augmenter de façon déterminante les capacités d'autonomie, la sécurité, l'utilisation des espaces libres.

Par ailleurs, si les documents US 2006/0009092 (D1) et « Fuel cells going on-board » Gunter Sattler, Journal of Power Sources 86 (2000), pages 61-67 (D2) proposent des navires munis de piles à combustibles pour produire, au moins en partie, l'énergie dont ils ont besoin, ils n'optimisent pas non plus le principe de la coque pour augmenter les capacités d'autonomie, la sécurité et l'utilisation des espaces libres.

Le dispositif, selon l'invention est caractérisé en ce qu'il constitue un nouveau type de coque de navigation de surface visant à remédier aux points énumérés plus haut, à savoir :
- non utilisation d'hydrocarbures
- coque insubmersible par structure cloisonnée
- absence de machinerie
- très longue autonomie
- combustible économique et non polluant
- auto-production du combustible par système embarqué
- motorisation silencieuse, non vibrante et sans production de chaleur
- équilibre/masse variables de la coque par ballasts doublés, gérés par ordinateur

Le dispositif, selon l'invention est caractérisé en ce que la coque dite « Coque Dynamique Autonome de navigation » est construite pour pouvoir produire, sans hydrocarbures ni sources extérieures tel que l'énergie solaire, sa propre source d'énergie sous forme d'électricité par le moyen d'un ou plusieurs systèmes de pile à combustibles (PC) inclus dans ladite coque, alimentés par des gaz combustibles (G) par hydrolyse contenus à l'intérieur même de la coque constituée de deux parois cloisonnées, lui conférant une autonomie très supérieure aux équipements existants.

Le dispositif, selon l'invention est caractérisé en ce que la coque dite « Coque Dynamique Autonome de navigation » est construite pour pouvoir faire varier de façon importante son centre de gravité et sa masse générale de manière à maîtriser plus finement les contraintes en cours de navigation par un ou des systèmes de ballasts (B) inclus dans la structure et gérés soit par ordinateur embarqué, soit manuellement à partir d'un poste de contrôle-commande.

Le dispositif selon l'invention présente, dit « Coque Dynamique Autonome de navigation », caractérisé en ce qu'il est conçu pour produire, à partir de la contenance de l'ensemble des volumes internes à sa structure et à des technologies existantes complémentaires tel que la pile à combustible et le principe d'électrolyse, adaptées au dispositif et inclues, ses moyens propres d'autonomie en termes d'énergie, de flottabilité, de maîtrise de la navigation marine.

Le dispositif, selon l'invention, est caractérisé en ce que un ou plusieurs compartiments étanches de la structure renferment les éléments constitutifs d'une ou plusieurs (PC) piles à combustible PEMFC, c'est à dire anode, cathode, membrane d'électrolyte et tous éléments complémentaires, directement alimentés en hydrogène et oxygène depuis les autres compartiments constitutifs de la structure contenant ces gaz ou seulement l'un d'eux (G) dans le cas du prélèvement d'oxygène ambiant.

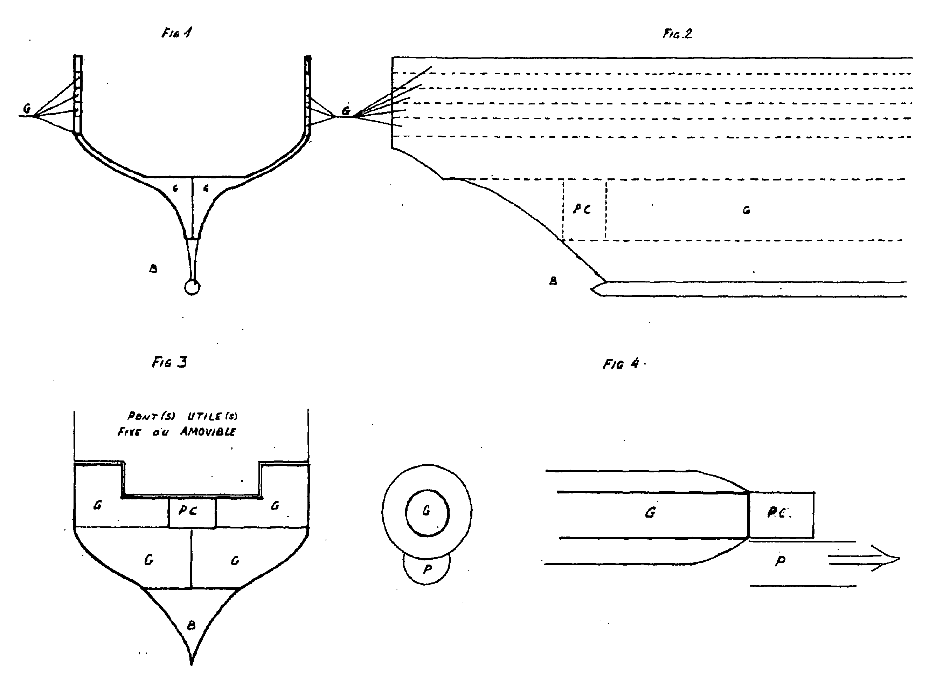

Le dispositif dit de « coque dynamique autonome » peut s'appliquer à toutes les tailles et formes de coque (Fig. 1, 2, 3, 5, 6), semi rigides (fig.4), mono ou multicoque (Fig . 7, 8), et à tous les matériaux utilisés pour la construction des-dites coques, associés ou non à un doublage de matière différente capable de contenir les-dits gaz et selon les normes techniques existantes.

Le dispositif peut être appliqué sur la totalité d'une coque (Fig. 1, 2) de par sa conception initiale de double paroi totale ou partielle, ou en partie seulement (Fig. 5, 6) c'est à dire par ajout de réservoirs spécifiques, permettant la modification et l'adaptation à la fois des navires traditionnels existants autant que des savoir-faires classiques en construction navale.

Le dispositif, selon l'invention, est caractérisé en ce que le bâtiment de navigation est constitué pour toute ou partie du bâtiment considéré, d'une coque double (Fig. 1), constituée de matériaux dont la mise en oeuvre permet de conserver séparément dans les espaces compartimentés compris entre les deux coques ou parties de coque d'une part des gaz (G) sous pression et d'autre part, en réservoirs souples de doublage, de l'eau de mer (B), et en ce que l'ensemble des compartiments contenant les gaz sont reliés entre eux par clapets automatisés et à un ou plusieurs modules de pile à combustible (PC), eux-même inclus ou non entre les deux coques en compartiments dits « techniques ».

La disposition et la taille des volumes conteneurs compris entre les deux coques ou installés dans une coque simple sont fonction de considérations techniques variables, selon les capacités recherchées tel que :
- résistance aux avaries : la multiplication des compartiments indépendants garantit l'insubmersibilité face à de plus ou moins grandes avaries.
- L'autonomie : les volumes conteneurs déterminent la quantité des gaz embarqués et les pressions tolérées, et donc l'importance de l'autonomie.
- La sécurité : toute éventualité de percement accidentel de la coque oblige à fractionner les volumes en fonction de l'usage fait du bâtiment.
- L'équilibre du navire : selon son dessin, son utilisation et les performances attendues, l'ensemble des compartiments conteneurs, eau, gaz lourd, gaz léger, seront disposés de manière à permettre une gestion adaptée.

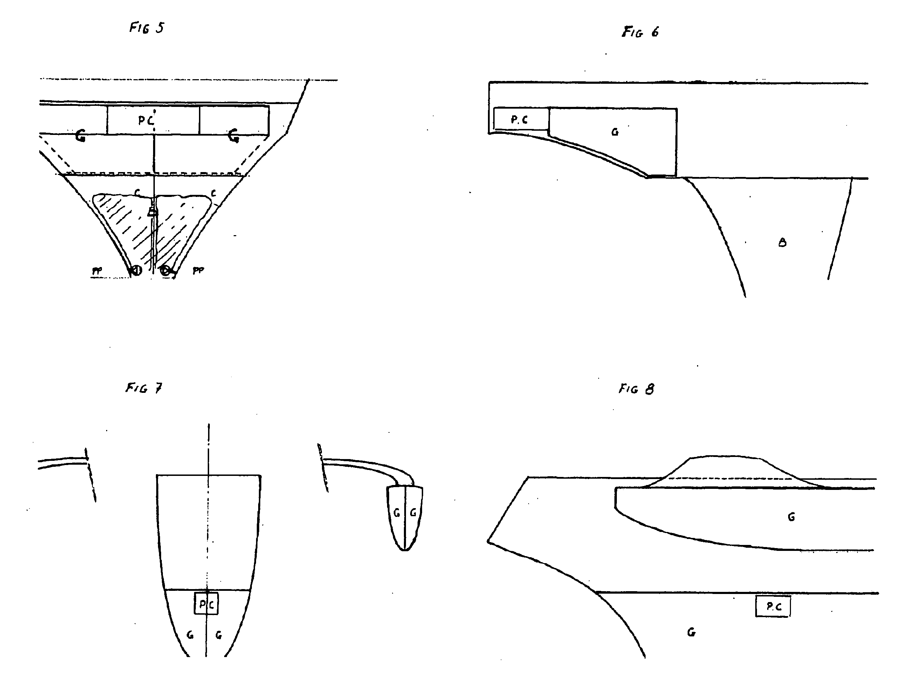

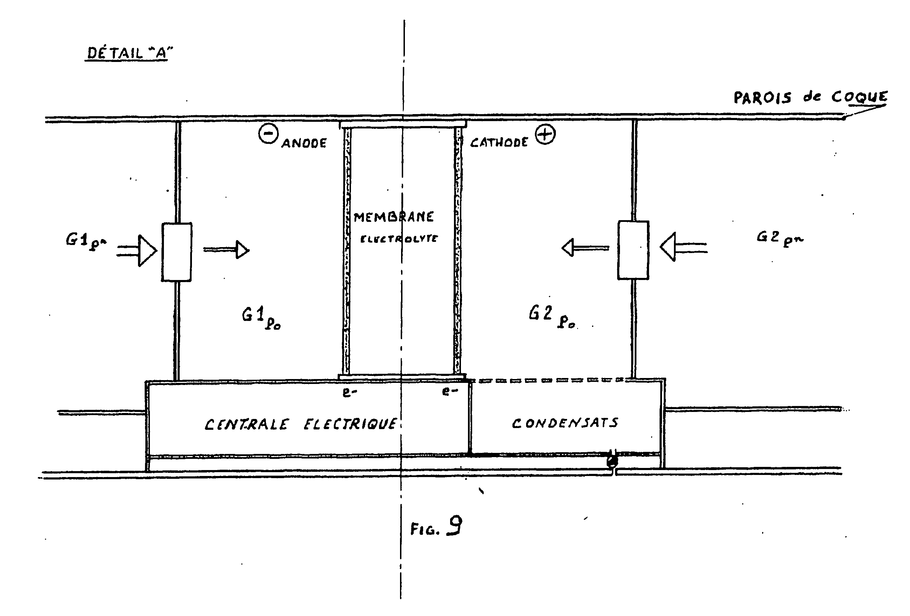

La conservation en milieux marin de gaz sous pression impose des attentions particulières en matière de réaction chimique et physique. Ainsi, en cas de réalisation d'une telle double-coque en acier, les faces internes des deux parois dé coques seront traitées par une application de matière inerte, imperméable aux gaz et propre à supporter les plus forts coefficients de dilatation du métal employé (ex : film plastique par pulvérisation, téflon). Dans le cas de fabrication de coques en matériaux non résistants aux pressions internes imposées par le principe, des compartiments conteneurs ou réservoirs adaptés à l'intérieur de ces coques pourront être installés, selon les normes autorisées (Fig. 5, 6).

Dans le cas de la transformation de bâtiments classiques existants, une installation de réservoirs et de modules techniques de pile à combustibles pourront être adaptés en remplacement des systèmes classiques de production d'énergie et de propulsion. Un système de propulsion électrique ou Pods (P) adapté pourra avantageusement convenir.

Le dispositif, selon l'invention, est caractérisé en ce que, dans certaines parties basses de la double-coque, des compartiments jouent le rôle de ballast (B) dont la particularité est d'être réglables soit par gestion informatique en fonction de l'état de la mer, de la vitesse recherchée ou de la charge embarquée, déterminée ou variable, soit par opération manuelle, de manière à optimiser l'équilibre et la flottabilité du bâtiment en fonction de l'état de charge des gaz combustibles à l'intérieur de la coque. Cette caractéristique de ballast à charge réglable, compris à l'intérieur des volumes de la double-coque, est produite par l'ingestion ou l'évacuation d'eau de mer par des pompes (PP) adaptées serties dans la face extérieure des compartiments prévus à cet effet. L'eau de mer peut être contenue soit directement dans ces compartiments traités contre la corrosion, soit dans des conteneurs souples (C) doublant les compartiments concernés.

Les pompes (PP) sont directement asservies au poste de contrôle-commande et au système de gestion informatique.

Les compartiments ou réservoirs servant de ballasts sont reliés en partie haute à un ou plusieurs systèmes automatisés de clapets d'admission d'air extérieur pour les ballasts non doublés, d'admission de gaz combustibles contenus dans les compartiments contigus pour les ballasts à réservoirs souples de doublage.

Les compartiments ou réservoirs contenant des gaz sous pression sont chacun reliés entre eux par dés clapets auto-bloquants adaptés permettant la répartition des pressions internes. L'ensemble de ces volumes sont reliés à un ou plusieurs modules dits de « pile à combustible » intégré(s) ou non dans la coque. Le système de clapets de sécurité est prévu pour obturer chacun des compartiments en cas de chute brutale de pression des gaz dudit compartiment correspondant, synonyme d'avarie. L'ensemble de la « coque dynamique » utilise ainsi ses particularités pour à la fois fabriquer son énergie et annuler presque tout risque de sombrer. L'ensemble de la coque faisant, en tant que corps creux étanche, office de bouée à l'échelle du bâtiment. Le système de circulation des fluides d'un compartiment à l'autre est conçu de manière à servir au rechargement par deux accès normalisés de manière à alimenter sans erreur possible tous les compartiments, en deux gaz différents ou en un seul, si l'installation utilise l'oxygène extérieur.

Les gaz contenus dans la majeure partie des compartiments que constitue l'espace interne de la double coque, ou dans les réservoirs aménagés dans le cas par exemple d'une adaptation aux navires classiques, peuvent être de deux natures différentes, compatibles avec le processus d'électrolyse de la pile à combustible, comme par exemple Oxygène et Hydrogène, ou d'une seule nature (hydrogène) si l'installation et le type de pile à combustible sont prévus pour prélever l'oxygène ambiant.

Dans le cas de deux gaz embarqués simultanément et pouvant être de masses volumiques très différentes, ceux-ci seront dès la conception disposés de manière à toujours garder un parfait équilibre de la double-coque ou des réservoirs, quel qu'en soit le compartimentage, et quel qu'en soit l'état de consommation des-dits gaz.

Les gaz sont stockés sous une pression répondant essentiellement aux normes autorisées dans le futur, en fonction de la nature du bâtiment, de la performance de la technique en construction navale, des matériaux et enfin de l'autonomie recherchée.

Le ou les modules de pile à combustible (PC) produisant la puissance électrique à partir des gaz embarqués dans la structure de la coque ou dans des réservoirs rajoutés ainsi que dans le cas d'utilisation d'oxygène ambiant, sont dimensionnés pour convenir à la puissance de la motorisation électrique choisie (P), ainsi qu'au type de navigation prévue afin d'optimiser l'autonomie de l'ensemble.

Le dispositif, selon l'invention, est caractérisé en ce que le ou les modules de pile à combustibles inclus dans la structure laissent libre toute la partie utile du bâtiment. Des trappes de visite destinées à la maintenance sont aménagées et garantissent l'accès et l'étanchéité par tous moyens appropriés. Dans ce cas, à la différence de l'adaptation du système sur des navires classiques, le ou les modules de pile à combustibles sont dimensionnés et positionnés de manière à s'intégrer sans installations intermédiaires au contact des combustibles préalablement décompressés dans des compartiments dits « de détente » situées de chaque côté du module de pile à combustibles (planche 3).

Certains types de navires sont, pour des raisons techniques variées, limités dans leurs dimensions tant intérieures qu'extérieures. Pour convenir de ces contraintes, autant que pour prévoir la modification de navires existants, la présente invention concerne toute installation d'un ensemble de réservoir pour gaz sous pression relié à un système de pile à combustible pour navire de surface, et ayant pour finalité la production d'énergie électrique. Les différents types d'installations de pile à combustible en navigation de surface envisagées par la présente invention sont de plusieurs ordres :
- l'installation d'un module « Pile à combustible/réservoir »r indépendant de la coque installés à l'intérieur d'un bâtiment classique de navigation ou prototype (Fig. 5, 6).
- L'installation d'un module « Pile à combustible/réservoir » inclus ou non dans la structure des bâtiments de navigation dits « semi rigides » (Fig. 4)
- L'installation d'un module de « pile à combustible/réservoir » inclus dans la coque, pour tout ou partie du bâtiment de navigation(Fig. 1, 2, 3, 7, 8).

Le principe, selon l'invention, est caractérisé en ce que l'énergie électrique fournie par la « coque dynamique autonome de navigation » en qualité de pile à combustible, est proportionnelle à l'importance du bâtiment et ne nécessite aucune autre source d'énergie. Il est équipé selon les besoins de tous types de batteries jugé adapté au fonctionnement du type de pile à combustible associé et au stockage d'énergie.

Les équipements de base sont fonction du type d'utilisation prévue pour le bâtiment mis à l'eau. Ces équipements comportent, hormis les batteries, divers propulseurs électriques marins, divers compresseurs, électrovannes et pompes, ainsi qu'une centrale informatique, et tous matériels d'asservissement et de contrôle du système complexe d'échange des volumes embarqués de gaz et d'eau. Ils comportent des systèmes de sécurité de navigation, et tous équipements utiles à une navigation maritime ou fluviale.

### Illustrations :

Planche 1 :
   figures 1 et 2 coque double pour grands bâtiments,
   : figure 3 coque-réservoir pour bâtiments de grande plaisance, pêche, etc.
   : figure 4 système intégré à la structure des semi-rigides
Planche 2 : figures 5 et 6 système rapporté dans une coque en totalité ou partiellement
   : figures 7 et 8 système adapté aux multicoques
Planche 3 : schéma de l'ensemble « pile à combustible » intégrée dans la structure d'un bâtiment ou indépendante.

## Revendications

1. Coque dynamique autonome de navigation intégrant dans ses structures ou rajoutées à celles-ci un ou plusieurs modules de piles à combustibles, **caractérisée en ce qu'**elle est conçue pour pouvoir produire à l'échelle de sa construction des ressources énergétiques sous forme électrique pour la totale autonomie d'un bateau et comportant
- une coque double pour tout ou partie du bâtiment constituant des compartiments d'une part dits techniques contenant une ou plusieurs installation complète de « pile à combustible » (PC) accessibles et d'autre part des compartiments conteneurs ou réservoirs reliés entre eux et aux modules de pile à combustible par vannes ou clapets assistés et dont les volumes en totalité utiles contiennent des gaz (G) de nature différente, séparés et sous pression en grandes quantités, servant de combustibles par hydrolyse, tel que hydrogène « H² » (G) et oxygène « O » (G) si nécessaire
- un ou plusieurs modules dits « pile à combustible PEMFC » (PC) ou équivalent générateurs de puissance électrique, par anode, cathode et membrane électrolyte, insérés dans les compartiments de la double coque même ou aménagés à l'intérieur de celle-ci, calculés en fonction des besoins énergétiques dudit navire et alimentés en combustibles gazeux (G) par les volumes contenants ou compartiments de ladite coque
- un système de ballasts contenus dans certains compartiments de la coque, doublés de réservoirs souples internes destinés à contenir de l'eau, directement reliés à l'extérieur par des pompes double flux, et ayant pour fonction, asservis au système de contrôle de navigation, de mieux maîtriser le centre de gravité et la navigabilité de l'ensemble de la-dite coque en embarquant ou en rejetant l'eau
- un système global de gestion informatique et manuelle de tous les éléments dits « dynamiques » tel que réservoirs de gaz, réservoirs d'eau de mer, modules de pile à combustibles, propulsion, pompes, batteries et instruments divers.

2. Coque dynamique de navigation, selon la revendication 1, **caractérisée en ce que** le système énergétique embarqué sous forme de modules dits « pile à combustible » PEMFC (PC), c'est à dire anode, cathode, membrane d'électrolyte et tous éléments complémentaires nécessaires inclus dans la double coque, ne nécessite aucun système propre de stockage de combustibles sous aucune forme, la double coque ou coque aménagée remplissant elle-mêmes cette fonction et concernant les différents types d'installations de pile à combustible en navigation de surface selon l'invention dont :
- l'installation d'un module « Pile à combustible/réservoir » indépendant de la coque installés à l'intérieur d'un bâtiment classique de navigation ou prototype,
- L'installation d'un module « Pile à combustible/réservoir » inclus ou non dans la structure des bâtiments de navigation dits « semi rigides »,
- L'installation d'un module de « pile à combustible/réservoir » inclus dans la coque, pour tout ou partie du bâtiment de navigation.

3. Coque dynamique de navigation, selon la revendication 1 et 2, **caractérisée en ce que** le principe de construction s'adapte à n'importe quelle forme et échelle tel que mono-coque, multicoque ou semi-rigide, tout en conservant les même caractéristiques, certains éléments de coque pouvant ne pas être doublés comme les corps annexes des multicoques

4. Coque dynamique de navigation, selon les revendications précédentes, **caractérisée en ce que** son principe peut être adapté pour être installé à l'intérieur d'une coque classique, par ajout de réservoirs sous pression des gaz combustibles et d'un ou plusieurs modules dits « pile à combustibles » et d'une motorisation compatible et en fonction des normes techniques admissibles présentes et à venir.

## Claims

1. Autonomous dynamic sailing hull integrated or added into its structures one or several fuel cells modules, **characterized in that** it is designed to be able to produce, at the scale of its construction, energy resources in electrical shape for the complete autonomy of a ship, and that it includes
- a double hull for all or part of the ship forming compartments on the one hand that are "technical" containing one or more complete accessible "fuel cell" (PC) installation and, on the other hand, some interconnected compartments, containers or tanks and fuel cell modules by assisted valves or flaps and whose volumes contain all relevant gases (G) of a different nature, separated and pressurized in large quantities and used as fuel by hydrolysis, such as hydrogen "H²" (G) and oxygen "O" (G) if necessary
- one or more modules called "PEMFC fuel cell" (PC) or equivalent electric power generators, by anode, cathode and electrolyte membrane, inserted into the compartments of the double hull or even arranged within it, calculated depending on the energy needs of the vessel and supplied with fuel gases (G) by the container volumes or compartments of the mentioned hull
- a ballast system contained in certain compartments of the hull, lined with flexible internal bladders intended to contain water, directly connected to the exterior by double flow pump and has the functions to control the navigation control system, to better control the center of gravity and the seaworthiness of the entire so-called hull for taking on or discharging water
- a comprehensive computerized and manual management system for all elements known as "dynamic" such as gas tanks, sea water tanks, fuel cell modules, propulsion, pumps, batteries and other instruments

2. Dynamic sailing hull, according to claim 1, **characterized in that** the energy system taken on under the form of modules known as "fuel cell" PEMFC (PC), i.e. anode, cathode, electrolyte membrane and all additional items necessary included in the double hull; **in that** no system for fuel storage in any form is needed, the double hull or converted hull fulfill this function themselves and on the different types of fuel cell installations in surface sailing according to the invention in which:
- the installation of a "fuel cell/ tank " module independent of the hull installed within a conventional sailing ship or prototype
- Installation of a "fuel cell/ tank" module that may or may not be included in the structure of sailing ships called "semi rigid"
- Installation of a "fuel cell/ tank" module included in the hull for any or part of the sailing ship.

3. Dynamic sailing hull, according to claim 1 or 2, **characterized in that** the basic design adapts to any shape and scale such as mono-hull, multihull or semi-rigid, while retaining the same characteristics, some hull elements cannot be lined such as the bodies related to the multihulls

4. Dynamic sailing hull, according to the previous claims, **characterized in that** its principle can be adapted to be installed within a conventional hull, by adding pressurized tanks of the fuel gases and one or more modules known as "fuel cell" and a compatible engine and based on admissible present and future technical standards.

## Patentansprüche

1. Autonomer dynamischer Schiffsrumpf, welcher in seinen Strukturen integriert oder mit diesen verbunden ein oder mehrere Brennstoffzellenmodule aufweist, **dadurch gekennzeichnet, dass** er dazu ausgestaltet ist, im Maßstab seiner Konstruktion Energieressourcen in elektrischer Form für die vollständige Autonomie eines Schiffes zu erzeugen und umfasst:
- einen Doppelrumpf für das gesamte Schiff oder einen Teil des Schiffes, welcher Abteile bildet, einerseits sogenannte technische, welche eine oder mehrere zugängliche Komplettinstallationen für "Brennstoffzellen" (PC) enthalten, und andererseits Behälter- oder Reservoirabteile, welche untereinander und mit den Brennstoffzellenmodulen durch Servoventile oder -klappen verbunden sind und deren nutzbare Gesamtvolumina Gase (G) unterschiedlicher Art, getrennt und unter Druck stehend in großen Mengen enthalten, welche als Brennstoffe für Hydrolyse dienen, wie z.B. Wasserstoff "H²" (G) und Sauerstoff "O" (G) falls erforderlich,
- ein oder mehrere als "PEMFC-Brennstoffzelle" (PC) bezeichnete Module oder äquivalente Erzeuger für elektrische Leistung über Anode, Kathode und Elektrolytmembran, welche in den Abteilen des Doppelrumpfes selbst eingesetzt oder im Inneren desselben angeordnet sind, berechnet abhängig von dem Energiebedarf des Schiffes und mit Brennstoffgasen (G) versorgt durch die Behältervolumina oder Abteile des Rumpfes,
- ein System von Ballasten, welche in bestimmten Abteilen des Rumpfes enthalten sind, welche mit flexiblen inneren Reservoirs ausgekleidet sind, die dazu bestimmt sind, Wasser zu enthalten, welche direkt durch Doppelflusspumpen mit der Außenseite verbunden sind, und als Funktion haben, durch das Navigationssteuersystem gesteuert, den Schwerpunkt und die Navigierbarkeit der Gesamtheit des Rumpfes beim Aufnehmen oder Abgeben von Wasser besser zu beherrschen,
- ein globales computerbasiertes und manuelles Verwaltungssystem für alle sogenannten "dynamischen" Elemente, wie z.B. Gasreservoirs, Meerwasserreservoirs, Brennstoffzellenmodule, Antrieb, Pumpen, Batterien und verschiedene Instrumente.

2. Dynamischer Schiffsrumpf nach Anspruch 1, **dadurch gekennzeichnet, dass** das bordeigene Energiesystem in Form von als "PEMFC-Brennstoffzelle" (PC) bezeichneten Modulen, d.h. Anode, Kathode, Elektrolytmembran und alle notwendigen in dem Doppelrumpf enthaltenen ergänzenden Elemente, kein eigenes System zur Speicherung von Brennstoffen in irgendeiner Form benötigt, wobei der Doppelrumpf oder ausgestattete Rumpf diese Funktion selbst und mit Bezug auf die verschiedenen Brennstoffzellen-Installationstypen für Oberflächenschifffahrt erfüllt, darunter:
- die Installation eines Moduls für "Brennstoffzelle/Reservoir" unabhängig von dem Rumpf, installiert im Inneren eines herkömmlichen Schiffs oder Prototyps,
- die Installation eines Moduls für "Brennstoffzelle/Reservoir", enthalten oder nicht enthalten in sogenannten "halbstarren" Strukturen von Schiffen,
- die Installation eines Moduls für "Brennstoffzelle/Reservoir", enthalten in dem Rumpf, für das gesamte oder einen Teil des Schiffs.

3. Dynamischer Schiffsrumpf nach Anspruch 1 und 2, **dadurch gekennzeichnet, dass** das Konstruktionsprinzip unabhängig von Form und Maßstab, wie z.B. Einkörperrumpf, Mehrkörperrumpf oder halbstarr, unter Beibehaltung derselben Eigenschaften geeignet ist, wobei bestimmte Elemente des Rumpfes nicht ausgekleidet sein können, wie z.B. die angefügten Körper von Mehrkörperrumpfen.

4. Dynamischer Schiffsrumpf nach den vorhergehenden Ansprüchen, **dadurch gekennzeichnet, dass** sein Prinzip angepasst sein kann, um im Inneren eines klassischen Rumpfes installiert zu werden, durch Hinzufügen von Druckreservoirs für Brennstoffgase und eines oder mehrerer als "Brennstoffzelle" bezeichneter Module und einer kompatiblen Motorisierung und in Abhängigkeit von derzeitigen und zukünftigen technisch zulässigen Normen.
